# EUROPÄISCHE PATENTSCHRIFT

(11) **EP 2 402 638 B1**
(45) Veröffentlichungstag und Bekanntmachung des Hinweises auf die Patenterteilung: **21.11.2018**
(21) Anmeldenummer: 11171671.8
(22) Anmeldetag: 28.06.2011
(51) Int. Cl.: F16L 19/00

(54) **Verbindungsanordnung zum Verbinden zweier Bauteile**
Connection assembly for connecting two components
Agencement de liaison destiné à la liaison de deux composants

(30) Priorität: 30.06.2010 DE 102010030754
(43) Veröffentlichungstag der Anmeldung: 04.01.2012
(73) Patentinhaber: Wohlfarth, Klaus, 74427 Fichtenberg (DE)
(72) Erfinder: Wohlfarth, Klaus, 74427 Fichtenberg (DE)
(74) Vertreter: Patentanwälte Ruff, Wilhelm, Beier, Dauster & Partner mbB

(56) Entgegenhaltungen:
- EP-A1- 1 953 394
- EP-A2- 0 893 618
- DE-C1- 3 936 362
- US-A- 3 762 745
- US-A- 4 762 344
- US-A- 5 248 004
- US-A1- 2002 153 723

## Beschreibung

Die Erfindung betrifft eine Verbindungsanordnung zum Verbinden zweier Bauteile, die Öl enthalten und zwischen denen ein Austausch von Öl stattfinden soll. Die Verbindungsanordnung soll also sowohl eine mechanische Verbindung zwischen den beiden Bauteilen herstellen als auch eine hydraulische Verbindung.

Ein Beispiel für eine derartige Anordnung ist die Verbindung zwischen einem Stoßdämpfergehäuse und einem Ausgleichsbehälter bei einem Kraftfahrzeug. Die Stoßdämpfergehäuse sind zylindrisch, und die Ausgleichsbehälter können ebenfalls zylindrisch sein. Sie sind üblicherweise neben dem Stoßdämpfergehäuse angeordnet. Es kann nun das Problem auftreten, dass neben dem Stoßdämpfergehäuse nicht ausreichend Platz ist, um einen Ausgleichsbehälter einer bestimmten Länge unterzubringen. Derartige Probleme können aber auch bei anderen Anwendungsfällen auftreten.

**Es ist bereits eine Verbindungsanordnung zur mechanischen und hydraulischen Verbindung zweier Rohre bekannt, bei der die Enden der Rohre an ihrer Innenseite jeweils ein Gewinde unterschiedlicher Steigung aufweisen und die Verbindung mithilfe einer hohlen Schraube erfolgt, die an ihrer Außenseite zwei Abschnitte mit jeweils einem Gewinde aufweist, das den Gewinden der beiden Rohrenden entspricht (**US 4762344**, Figur 5).**

**Ähnliche Rohrverbindungen für Rohrteile sind ebenfalls bekannt (**US 2002/0153723 A1**,** DE 3936362 C1**,** US 5248004**).**

Der Erfindung liegt die Aufgabe zu Grunde, eine Möglichkeit zur Verbindung zweier Öl enthaltender Bauteile zu schaffen, bei der die geometrische Anordnung der beiden Bauteile ohne Änderung der Bauteile selbst mit geringem Aufwand geändert werden kann, insbesondere aus Platzgründen.

Zur Lösung dieser Aufgabe schlägt die Erfindung eine Verbindungsanordnung mit dem im Anspruch 1 genannten Merkmalen vor. Weiterbildungen der Erfindung sind Gegenstand von Unteransprüchen.

Erfindungsgemäß ist also für jedes der beiden Bauteile ein hohler Stutzen vorgesehen, der mit dem Bauteil entweder direkt verbunden oder an ihm anbringbar ist. Der Durchgang des Stutzens führt in den Raum, in dem das Öl enthalten ist. Das Ende des Stutzens liegt in einer mindestens angenähert ebenen Stirnfläche. Die beiden Stirnflächen sind so aufeinander abgestimmt, dass die beiden Stutzen zusammengefügt werden können. Bei der Zusammenfügung der beiden Stutzen liegen die beiden Durchgänge der Stutzen in gegenseitiger Verlängerung, so dass durch die Stutzen hindurch ein Ölaustausch erfolgen kann. Zur mechanischen Verbindung der beiden Stutzen dient die hohle Schraube, die mit dem einem Gewinde in das Gewinde des einen Stutzens und mit dem anderen Gewinde in das Gewinde des anderen Stutzens eingreift.

Durch die unterschiedlichen Steigungen der beiden Gewinde erfolgt beim Verschrauben der hohlen Schraube eine Anpressung der beiden Stutzen aneinander. Die beiden Stutzen wirken im Zusammenwirken mit der Schraube wie eine Mutter und eine Kontermutter, so dass keine zusätzlichen Maßnahmen zur Sicherung der Schraubverbindung erforderlich sind.

In Weiterbildung der Erfindung kann vorgesehen sein, dass die beiden Stirnflächen eben sind, so dass sie direkt flächig aneinander anliegen können.

Damit auch unter ungünstigen Bedingungen sichergestellt ist, dass die einmal eingestellte Winkelposition erhalten bleibt, ist in Weiterbildung der Erfindung vorgesehen, dass die Verbindungsanordnung eine Einrichtung zur Dreharretierung der beiden Stutzen um die durch die Schraube gebildete Achse aufweist, wobei es sich um eine formschlüssige Arretierung handelt. Diese formschlüssige Dreharretierung kann beispielsweise dadurch gebildet sein, dass die beiden Stirnflächen Vorsprünge und Rücksprünge aufweisen, die aufeinander abgestimmt sind. Es kann sich beispielsweise um radial verlaufende Rippen und Nuten handeln.

Insbesondere wird von der Erfindung vorgeschlagen, dass die Einrichtung zur Dreharretierung Sacklöcher in der Stirnfläche jedes Stutzens aufweist, und dass mindestens ein Passstift vorgesehen ist, der mit enger Passung in ein Sackloch eingesetzt werden kann und nach dem Zusammensetzen in zwei gegenüberliegende Sacklöcher eingreift. Natürlich können auch mehrere Passstifte verwendet werden.

Um eine Abdichtung möglichst einfach zu gestalten, kann erfindungsgemäß in Weiterbildung vorgesehen sein, dass eine Stirnfläche der beiden Stutzen eine um die Innenöffnung des Stutzens herum laufende Nut aufweist, in die ein O-Ring als Dichtung eingelegt werden kann. Dieser kann insbesondere mit einer in diesem Bereich ebenen Stirnfläche des anderen Stutzens zusammen wirken.

Es wurde eingangs erwähnt, dass jeder Stutzen in einen Öl enthaltenden Raum des zugeordneten Bauteils führt. Der Stutzen kann beispielsweise direkt an dem Gehäuse des zugeordneten Bauteils angebracht sein, insbesondere angeschweißt.

Es ist aber ebenfalls möglich und wird von der Erfindung vorgeschlagen, dass ein Stutzen an einem Aufnahmeelement angebracht, beispielsweise angeschweißt ist, das dann mit dem Bauteil verbunden wird. Die Verbindung dieses Aufnahmeelements, beispielsweise eines Aufnahmerings, geschieht natürlich derart, dass diese Verbindung flüssigkeitsdicht ist.

Beispielsweise kann ein Aufnahmering an seiner dem Bauteil gegenüberliegenden Innenseite eine mit der Innenöffnung des an ihm angebrachten Stutzens in Verbindung stehende Vertiefung, beispielsweise eine Nut, insbesondere eine umlaufende Nut aufweisen, und die Vertiefung umgebend eine glatte zylindrische Fläche, die der Außenfläche des Bauteils entspricht. Dieser Aufnahmering lässt sich dann so mit dem Bauteil verbinden, dass eine Öffnung des Gehäuses des Bauteils in der Vertiefung des Aufnahmerings mündet.

Falls es sich bei der Vertiefung um eine umlaufende Nut handelt, ist also beidseits der umlaufenden Nut jeweils eine glatte zylindrische Fläche ausgebildet, die zur Führung des Aufnahmerings an dem zugeordneten Bauteil dient. Bei einem Kreiszylinder als Grundform des Aufnahmerings und des Bauteils lässt sich also der Aufnahmering und damit der Stutzen in jeder beliebigen Winkelposition gegenüber der Achse des zylindrischen Bauteils anordnen. Dies führt zu einer weiteren Verbesserung der Anordnungsmöglichkeit des zweiten Bauteils ohne dessen Änderung.

In nochmaliger Weiterbildung der Erfindung kann vorgesehen sein, dass das Gehäuse des Bauteils, mit dem der Aufnahmering verbunden werden soll, nicht nur eine radiale Öffnung aufweist, sondern mehrere über den Umfang verteilte. Dadurch wird eine Vergleichmäßigung der Ölströmung und eine Vergrößerung des Querschnitts trotz relativ kleiner Bohrungen erreicht.

Erfindungsgemäß kann in Weiterbildung vorgesehen sein, dass das Bauteil, an dem der Aufnahmering angebracht wird, beidseits der Stelle, wo die radialen Öffnungen ausmünden, eine umlaufende der glatten Fläche des Aufnahmerings gegenüberliegende Nut zur Aufnahme je einer Dichtung aufweist. Die Anordnung der Dichtungen an der Außenseite des Bauteils lässt die Montage der Dichtungen leichter durchführen als an der Innenseite des Aufnahmerings.

Zur Betätigung der hohlen Schraube, mit der die beiden Stutzen gegeneinander verpresst werden, kann diese insbesondere einen Innensechskant als Antrieb aufweisen.

Es wurde bereits eingangs erwähnt, dass ein Anwendungsfall die Verbindung eines Ausgleichsbehälters mit einem Stoßdämpfergehäuse ist. In diesem Fall ist also das erste Bauteil beispielsweise das Stoßdämpfergehäuse, und das zweite Bauteil der Ausgleichsbehälter.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: in einer teilweise geschnittenen Seitenansicht die Verbindung eines Ausgleichsbehälters mit einem Stoßdämpfergehäuse;
- Figur 2: schematisch die Ansicht einer Stirnfläche eines Verbindungsstutzens;
- Figur 3: in vergrößertem Maßstab einen Ausschnitt aus der Anordnung der Figur 1;
- Figur 4: eine der Figur 3 entsprechende Darstellung einer geänderten Ausführungsform.

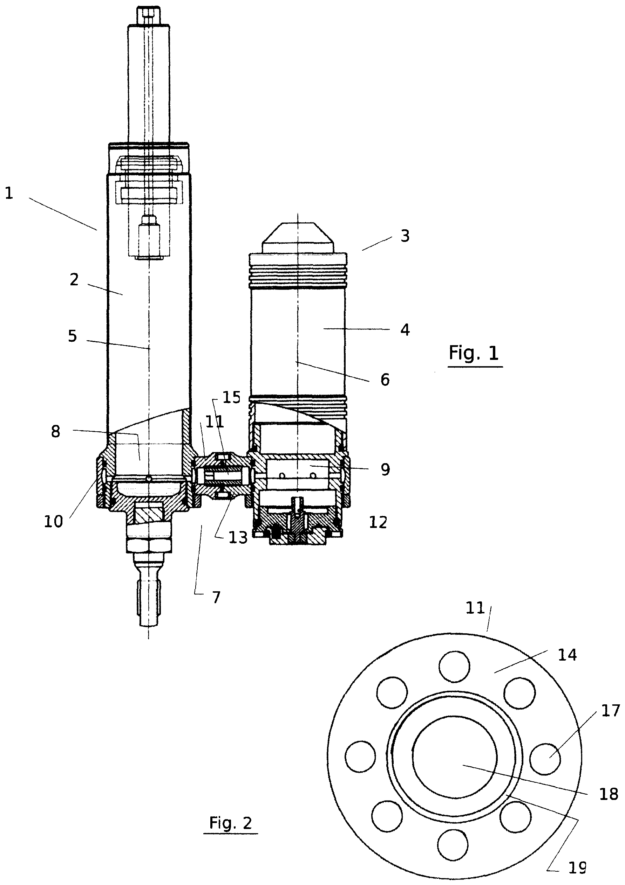

In Figur 1 ist ein erstes Bauteil 1 in Form eines Stoßdämpfergehäuses 2 in einer teilweise geschnittenen Seitenansicht dargestellt. Parallel zu dem zylindrischen Bauteil 1 ist ein zweites Bauteil 3 angeordnet, bei dem es sich um einen Ausgleichsbehälter 4 für den Stoßdämpfer 2 handelt. Beide zylindrischen Bauteile 1, 3 verlaufen parallel zueinander, was durch die angedeutete Mittelachse 5, 6 dargestellt ist. Auch in einer Ansicht von rechts in Figur 1 verlaufen in der dargestellten Position die beiden Bauteile 1, 3 parallel zueinander.

Der nur vereinfacht dargestellte Stoßdämpfer 2 enthält einen Innenraum 8, der mit Öl gefüllt ist. Auch der Ausgleichsbehälter 4 enthält einen Innenraum 9, der mit Öl gefüllt ist. Zwischen diesen beiden mit Öl gefüllten Räumen 8, 9 soll durch eine Verbindungsanordnung nicht nur eine mechanische, sondern auch eine hydraulische Verbindung hergestellt werden.

Zur Verbindung der beiden Bauteile 1, 3 miteinander dient eine Verbindungsanordnung 7. Die Verbindungsanordnung 7 enthält einen ersten Aufnahmering 10, der mit dem Stoßdämpfer 2 verbunden ist. Seitlich ist an dem Aufnahmering 10 einen hohler Stutzen 11 befestigt, beispielsweise verschweißt. Die Verbindungsanordnung 7 enthält einen zweiten ähnlich aufgebauten Aufnahmering 12, der an dem Ausgleichsbehälter 4 angebracht ist. Auch dieser Aufnahmering 12 weist seitlich einen Stutzen 13 auf, der hohl ist. Die beiden Stutzen 11, 13 weisen jeweils eine Stirnfläche 14 auf, mit denen sie aneinander anliegen. Zur Verbindung der beiden Stutzen 11, 13 aneinander beziehungsweise miteinander dient eine hohle Schraube 15, die mit jeweils einem Gewinde in die Stutzen 11, 13 eingreift. Zur Drehsicherung um die durch die Schraube 15 gebildete Achse sind Passstifte 16 vorgesehen, die in gegenüberliegende Sacklöcher 17 eingreifen, die von der Stirnfläche 14 jedes Stutzens 11, 13 ausgehen.

Diese Anordnung der Sacklöcher 17 in der Stirnfläche 14 eines Verbindungsstutzens 11 ist in Figur 2 dargestellt. Die Figur 2 zeigt eine Ansicht eines solchen Verbindungsstutzens von seiner freien Stirnseite 14 aus. In dem Stutzen ist eine Innenöffnung 18 vorhanden, die durch den Stutzen axial hindurch geht. Jeder Stutzen 18 weist mindestens in dem an die Stirnfläche 14 ausgehenden Bereich ein Innengewinde auf. Um die Innenöffnung 18 herum ist bei einem der beiden Stutzen in der Stirnfläche 14 eine umlaufende Nut 19 ausgebildet, die zur Aufnahme einer Dichtung dient. Außerhalb der Dichtungen sind in der Stirnfläche 14 die bereits erwähnten Sacklöcher 17 angeordnet, deren Winkelabstand in der vereinfachten Darstellung der Figur 2 45° beträgt, wobei die Zahl und Anordnung der Sacklöcher von der gewünschten Verstellmöglichkeit abhängt. Mit Ausnahme der umlaufenden Nut 19 sind die Stirnflächen der beiden Stutzen 11, 13 spiegelbildlich zueinander ausgebildet. Durch Einsetzen von Passstiften 16 in die übereinstimmenden Sacklöcher 17 kann eine bestimmte Winkelposition um die durch die Schraube 15 gebildete Achse eingestellt werden.

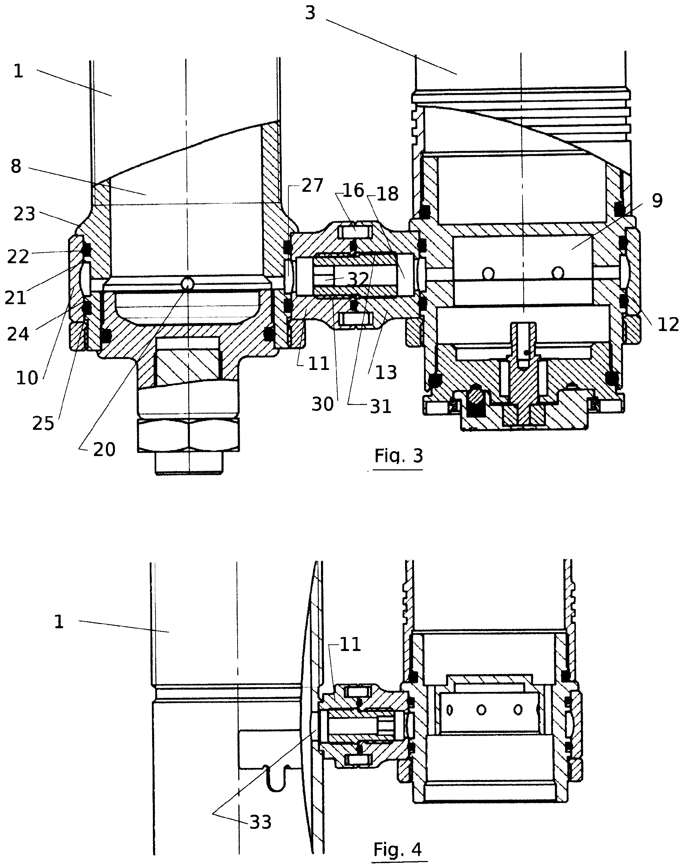

Einzelheiten der Anordnung gehen aus der vergrößerten Darstellung der Figur 3 besser hervor. Aus dem Aufnahmeraum 8 des ersten Bauteils 1 gehen mehrere radiale Bohrungen 20 von der Innenseite zur Außenseite des Bauteils 1 hindurch. An der Außenseite des Bauteils 1 ist axial zu beiden Seiten der Stelle, wo die radialen Bohrungen 20 ausmünden, jeweils eine umlaufende Rippe 21 mit einer Nut zur Aufnahme einer Dichtung 22 ausgebildet. Oberhalb der Rippe 21 mit der Dichtung 22 an der in Figur 1 oberen Seite der Bohrungen 20 ist eine nach unten gerichtete Schulter 23 gebildet. Von der Unterseite her ist auf das Stoßdämpfergehäuse 2 der Aufnahmering 10 aufgeschoben, bis er mit seinem oberen Rand an der Schulter 23 anliegt. In dieser Position liegt die glatte zylindrische Innenfläche des Aufnahmerings 10 an der radialen Außenseite der Rippe 21 an, so dass die Dichtung 22 mit der glatten Innenfläche zusammenwirkt.

Auch unterhalb der Stelle, wo die Bohrungen 20 ausmünden, ist eine solche Rippe 24 mit einer Nut und einer Dichtung 25 ausgebildet. Der Aufnahmering 10 liegt auch an dieser Stelle dichtend an. Gesichert wird diese Anordnung in axialer Richtung durch das Aufschrauben einer Mutter 26. Auf diese Weise münden die Bohrungen 20 in einem umlaufenden Kanal 27 zwischen den beiden Rippen 21, 24. Aus diesem Kanal 27 kann das Öl durch den Durchgang 18 des Stutzens 11 hindurch in den Durchgang 18 des anderen Stutzens 13 gelangen. Dieser andere Stutzen 13 ist mit einer ähnlichen Anordnung mit dem Innenraum 9 des zweiten Bauteils 3 verbunden.

Wie bereits erwähnt, haben beide Stutzen 11, 13 im Bereich ihrer jeweiligen Stirnfläche ein Gewinde 30, 31, wobei das Gewinde 30 des einen Stutzens 11 eine größere Steigung als das Gewinde 31 des anderen Stutzens 13 aufweist. Auch die Schraube 15 weist zwei Gewinde auf, die mit den Gewinden 30, 31 der beiden Stutzen 11, 13 in Eingriff stehen. Durch Verschrauben der Schraube 15 werden die beiden Stutzen 11, 13 in der durch die Passstifte 16 definierten Position gegeneinander verpresst beziehungsweise bei Drehung der Schraube in umgekehrter Richtung voneinander gelöst.

Um die Drehposition der beiden Stutzen 11, 13 zueinander und damit die Drehposition der beiden Achsen 5, 6 festzulegen, werden die beiden Aufnahmeringe 10, 12 vor der Anbringung an den Bauteilen 1, 3 in der gewünschten Ausrichtung angeordnet, die Passstifte in die gegenüberliegenden Sacklöcher 17 eingesetzt und die Schraube festgeschraubt. Der Zugriff auf eine Antriebsausbildung 32 in Form eines Sechskants kann von der Innenseite des Aufnahmerings 10 her erfolgen.

Bei der in den Figuren 1-3 dargestellten Ausführungsform enthält die Verbindungsanordnung 7 zwei Aufnahmeringe mit jeweils einem Stutzen 11, 13. Beide Aufnahmeringe können beispielsweise auch identisch sein. Es ist aber auch denkbar, dass ein Stutzen 11 direkt an einem Bauteil angebracht ist. Eine solche Möglichkeit ist in Figur 4 dargestellt. Hier ist der linke Stutzen 11 direkt an dem Gehäuse des Bauteils 1 befestigt, beispielsweise angeschweißt. An der Stelle des Durchgangs 18 des Stutzens 11 weist die Wand des Bauteils 1 eine Öffnung 33 auf, durch die hindurch der Ölaustausch erfolgen kann.

Die Anordnung des Stutzens mit einem Aufnahmering 10 beziehungsweise 12 hat den Vorteil, dass der Stutzen gegenüber dem Gehäuse in Umfangsrichtung an beliebiger Stelle orientiert werden kann, da durch die mehreren Bohrungen 20 das Öl in den Kanal 27 gelangen kann und umgekehrt. Wenn eine solche Vielseitigkeit nicht gewünscht ist, reicht es auch aus, dass nur an einer Stelle eines Aufnahmerings eine Verbindung zwischen dem Innenraum 8 des einen Bauteils und dem Durchgang 18 des Stutzens gegeben ist.

Bei der in Figur 3 dargestellten Ausführungsform enthält auch der Aufnahmering 10, 12 eine flache Nut, die den Kanal 27 begrenzt. Bei der Art des Kanals zwischen zwei Rippen 21,24 könnte der Aufnahmering 10, 12 an der Innenseite auch durchgehend zylindrisch ausgebildet sein.

## Patentansprüche

1. Verbindungsanordnung mit einem ersten Bauteil, das als Stoßdämpfer ausgebildet ist, und einem zweiten Bauteil, das als Ausgleichsbehälter ausgebildet ist, zur mechanischen und hydraulischen Verbindung der beiden Öl enthaltenden Bauteile (1,3), mit einem an dem ersten Bauteil (1) angebrachten beziehungsweise anbringbaren hohlen Stutzen (11) mit einer zumindest angenähert ebenen Stirnfläche (14),
dessen mit einem Öl enthaltenden Raum (8) des ersten Bauteils (1) in Verbindung stehende Innenöffnung (18) mindestens teilweise mit einem Gewinde (30) versehen ist,
einem an dem zweiten Bauteil (3) angebrachten beziehungsweise anbringbaren hohlen Stutzen (13) mit einer der Stirnfläche (14) des Stutzens des ersten Bauteils (1) angepassten Stirnfläche (14),
dessen mit einem Öl enthaltenden Raum (9) des zweiten Bauteils (3) in Verbindung stehende Innenöffnung (18) mindestens teilweise mit einem Gewinde (31) versehen ist,
wobei die Steigung der Gewinde (30, 31) beider Stutzen (11, 13) unterschiedlich ist, sowie mit
einer hohlen Schraube (15), die
ein dem Gewinde (30) des ersten Stutzens (11) und daran anschließend ein dem Gewinde (31) des zweiten Stutzens (13) entsprechendes Gewinde aufweist, und mit
einer Einrichtung zur formschlüssigen Dreharretierung der beiden Stutzen (11, 13) um die durch die Schraube (15) gebildete Achse.

2. Verbindungsanordnung nach Anspruch 1, bei der die Einrichtung zur Dreharretierung der beiden Stutzen (11, 13) mindestens ein, vorzugsweise mehrere Sacklöcher (17) in der Stirnfläche (14) jedes Stutzens (11, 13) und mindestens einen in das Sackloch (17) einsetzbaren über die Stirnfläche (14) vorstehenden Passstift (16) aufweist.

3. Verbindungsanordnung nach einem der vorhergehenden Ansprüche, bei der mindestens eine Stirnfläche (14) eine um die Innenöffnung (18) herum laufende Nut (19) zur Aufnahme einer Dichtung aufweist.

4. Verbindungsanordnung nach einem der vorhergehenden Ansprüche, bei der ein Stutzen (11) an dem Gehäuse des einen Bauteils (1) angebracht, insbesondere angeschweißt ist.

5. Verbindungsanordnung nach einem der vorhergehenden Ansprüche, bei der mindestens ein Stutzen (11, 13) an einem Aufnahmering (10, 12) angebracht insbesondere angeschweißt ist, der flüssigkeitsdicht mit dem Gehäuse des zugeordneten Bauteils (1, 3) verbindbar ist.

6. Verbindungsanordnung nach Anspruch 5, bei der der Aufnahmering (10, 12) an seiner Innenseite eine mit der Innenöffnung (18) des an ihm angebrachten Stutzens (11, 13) in Verbindung stehende Vertiefung, beispielsweise eine Nut, insbesondere eine umlaufende Nut und diese Vertiefung umgebend eine glatte Fläche aufweist.

7. Verbindungsanordnung nach Anspruch 6, bei der das Gehäuse eines Bauteils mindestens eine radiale Öffnung aufweist, die bei angebrachten Aufnahmering in der Vertiefung des Aufnahmerings mündet.

8. Verbindungsanordnung nach einem der Ansprüche 5 bis 7, bei der das Gehäuse eines Bauteils (1, 3) an seiner dem Aufnahmering zugewandten Außenseite eine Vertiefung, beispielsweise eine Nut, insbesondere eine umlaufende Nut aufweist, in der eine mit dem Innenraum (8, 9) des Bauteils (1,3) in Verbindung stehende Bohrung (20) in Verbindung steht.

9. Verbindungsanordnung nach einem der Ansprüche 6 bis 8, bei der das Bauteil (1, 3) beidseits der radialen Öffnung (20) eine umlaufende der glatten Fläche des Aufnahmerings (10, 12) gegenüberliegende Nut zur Aufnahme je einer Dichtung (22, 25) aufweist.

10. Verbindungsanordnung nach einem der vorhergehenden Ansprüche, bei der die hohle Schraube (15) einen Innensechskant als Antrieb aufweist.

## Claims

1. Connection arrangement, having a first component configured as a shock absorber and a second component configured as an equalizing chamber, for mechanical and hydraulic connection of the two oil-containing components (1, 3), comprising a hollow connecting piece (11) attached or attachable to the first component (1) having an at least approximately flat end face (14),
an inner opening (18) of the connecting piece being in connection with an oil-containing chamber (8) of the first component (1) and being at least partially provided with a thread (30),
a hollow connecting piece (13) attached or attachable to the second component (3), the connecting piece having an end face (14) adapted to the end face (14) of the connecting piece of the first component (1),
an inner opening (18) of the connecting piece being in connection with an oil-containing chamber (9) of the second component (3) and being at least partially provided with a thread (31),
wherein the pitch of the threads (30, 31) of both connecting pieces (11, 13) is different from each other, and comprising
a hollow screw (15) that has a thread corresponding to the thread (30) of the first connecting piece (11) followed by a thread corresponding to the thread (31) of the second connecting piece (13), and comprising
a device for locking the rotation in a form-fitting manner of the two connecting pieces (11, 13) about the axis formed by the screw (15).

2. Connection arrangement according to claim 1, wherein the device for locking the rotation of the two connecting pieces (11, 13) has at least one, preferably a plurality of blind holes (17) in the end face (14) of each connecting piece (11, 13) and at least one alignment pin (16) insertable in the blind hole (17) and projecting beyond the end face (14).

3. Connection arrangement according to any of the preceding claims, wherein at least one end face (14) has a groove (19) running around the inner opening (18) for receiving a seal.

4. Connection arrangement according to any of the preceding claims, wherein a connecting piece (11) is connected, in particular welded, to the housing of one component (1).

5. Connection arrangement according to any of the preceding claims, wherein at least one connecting piece (11, 13) is attached, in particular welded, to a receiving ring (10, 12) that can be connected liquid-tight to the housing of the associated component (1, 3).

6. Connection arrangement according to claim 5, wherein the receiving ring (10, 12) has a recess, for example a groove, in particular a peripheral groove, on its inside that is in connection with the inner opening (18) of the connecting piece (11, 13) attached thereto, and has a smooth surface surrounding this recess.

7. Connection arrangement according to claim 6, wherein the housing of a component has at least one radial opening that ends in the recess of the receiving ring when the receiving ring is attached.

8. Connection arrangement according to any of claims 5 to 7, wherein the housing of a component (1, 3) has a recess, for example a groove, in particular a peripheral groove, in its outer side facing the receiving ring, which recess is connected via a hole (20) with the inner chamber (8, 9) of the component (1, 3).

9. Connection arrangement according to any of claims 6 to 8, wherein the component (1, 3), on either side of the radial opening (20), has a peripheral groove opposite the smooth surface of the receiving ring (10, 12) to receive a respective seal (22, 25).

10. Connection arrangement according to any of the preceding claims, wherein the hollow screw (15) has a hexagon socket as a drive.

## Revendications

1. Agencement de connexion comprenant un premier composant qui est réalisé sous la forme d'un pare-chocs et un deuxième composant qui est réalisé sous la forme d'un réservoir de compensation, pour la connexion mécanique et hydraulique des deux composants (1, 3) contenant de l'huile, comprenant une buse creuse (11) montée ou pouvant être montée sur le premier composant (1), avec une surface frontale (14) au moins approximativement plane,
dont l'ouverture interne (18) en liaison avec un espace (8) du premier composant (1) contenant de l'huile est pourvue au moins en partie d'un filetage (30),
une buse creuse (13) montée ou pouvant être montée sur le deuxième composant (3), avec une surface frontale (14) adaptée à la surface frontale (14) de la buse du premier composant (1),
dont l'ouverture interne (18) en liaison avec un espace (9) du deuxième composant (3) contenant de l'huile est pourvue au moins en partie d'un filetage (31),
les pas de filetage (30, 31) des deux buses (11, 13) étant différents, et comprenant
une vis creuse (15) qui présente un filetage correspondant au filetage (30) de la première buse (11) et à la suite de celui-ci, un filetage correspondant au filetage (31) de la deuxième buse (13), et comprenant
un dispositif pour le blocage en rotation par engagement par correspondance de formes des deux buses (11, 13) autour de l'axe formé par la vis (15).

2. Agencement de connexion selon la revendication 1, dans lequel le dispositif pour le blocage en rotation des deux buses (11, 13) présente au moins un, de préférence plusieurs trous borgnes (17) dans la surface frontale (14) de chaque buse (11, 13) et au moins une goupille d'ajustement (16) pouvant être insérée dans le trou borgne (17) et faisant saillie au-delà de la surface frontale (14).

3. Agencement de connexion selon l'une quelconque des revendications précédentes, dans lequel au moins une surface frontale (14) présente une rainure (19) s'étendant autour de l'ouverture interne (18) pour recevoir un joint d'étanchéité.

4. Agencement de connexion selon l'une quelconque des revendications précédentes, dans lequel une buse (11) est montée, notamment soudée, sur le boîtier de l'un des composants (1).

5. Agencement de connexion selon l'une quelconque des revendications précédentes, dans lequel au moins une buse (11, 13) est montée, notamment soudée, sur une bague de réception (10, 12) qui peut être connectée de manière étanche aux fluides au boîtier du composant associé (1, 3).

6. Agencement de connexion selon la revendication 5, dans lequel la bague de réception (10, 12) présente, au niveau de son côté interne, un renfoncement, par exemple une rainure, notamment une rainure périphérique en liaison avec l'ouverture interne (18) de la buse (11, 13) montée sur celle-ci, et présente une surface lisse tout autour de ce renfoncement.

7. Agencement de connexion selon la revendication 6, dans lequel le boîtier d'un composant présente au moins une ouverture radiale qui, lorsque la bague de réception est montée, débouche dans le renfoncement de la bague de réception.

8. Agencement de connexion selon l'une quelconque des revendications 5 à 7, dans lequel le boîtier d'un composant (1, 3) présente, au niveau de son côté extérieur tourné vers la bague de réception, un renfoncement, par exemple une rainure, notamment une rainure périphérique, dans lequel est connecté un alésage (20) en liaison avec l'espace interne (8, 9) du composant (1, 3).

9. Agencement de connexion selon l'une quelconque des revendications 6 à 8, dans lequel le composant (1, 3) présente, de chaque côté de l'ouverture radiale (20), une rainure périphérique opposée à la surface lisse de la bague de réception (10, 12), pour à chaque fois recevoir un joint d'étanchéité (22, 25).

10. Agencement de connexion selon l'une quelconque des revendications précédentes, dans lequel la vis creuse (15) présente une douille hexagonale en tant qu'entraînement.
